# EUROPEAN PATENT APPLICATION

(11) **EP 4 699 903 A1**
(43) Date of publication of application: **25.02.2026**
(21) Application number: 25194879.0
(22) Date of filing: 08.08.2025
(51) Int. Cl.: B62D 21/18, B62D 57/024, B62D 57/028, B62D 61/10, B62D 55/065

(54) **HIGH MOBILITY ROBOT WITH WHEELED LIMBS AND PASSIVE SUSPENSION**

(30) Priority: 20.08.2024 US 202418809766
(71) Applicant: Eagle Technology, LLC, Melbourne, FL 32919 (US); Florida State University Research Foundation, Inc., Tallahassee, FL 32310 (US)
(72) Inventor: BOSSCHER, Paul, West Melbourne, 32904 (US); CLARK, Jonathan, Tallahassee, 32309 (US); HUBICKI, Christian, Tallahassee, 32303 (US)
(74) Representative: Schmidt, Steffen J.

(57) **Abstract**

A mobile platform (MP) and method for operating same. The MP comprising: a chassis which extends in a longitudinal direction from a back end to a front end and extends in lateral directions from a centerline to two opposing lateral sides (wherein the chassis comprises body parts configured to rotate); limbs coupled to chassis (wherein each limb comprises an upper limb member, a lower limb member, a first mechanical joint provided at a first point of articulation between the chassis and the upper limb member, and a second mechanical joint provided at a second point of articulation where the upper limb member meets the lower limb member); and wheels connected to the limbs. Each lower limb member has a first wheel connected to a first end and a second wheel connected to an opposing second end. The second mechanical joint may be located between the first and second wheels.

## Description

### BACKGROUND

### Description of the Related Art

Unmanned ground vehicles (UGVs) are being used for an increasing number of tasks, including those involving site security, inspection, emergency response, law enforcement and intelligence/surveillance and reconnaissance (ISR). Consequently, mission objectives for UGVs can involve numerous operational requirements, many of which can be conflicting in nature. For example, UGVs should be highly mobile to not only facilitate mobility on obstacles and irregular terrain (e.g., climbing stairs) and small enough to fit into tight areas (e.g. going through doors and small stairwells), but also have the ability to carry heavy payloads for extended periods of time.

### SUMMARY

This document concerns mobile platform(s). The mobile platform(s) comprise(s): a chassis which extends in a longitudinal direction from a back end to a front end and extends in lateral directions from a platform centerline to two opposing lateral sides, the chassis comprising a plurality of body parts configured to rotate relative to each other; a plurality of limbs coupled to the chassis (wherein each limb of said limbs comprises an upper limb member, a lower limb member, a first mechanical joint provided at a first point of articulation between the chassis and the upper limb member, and a second mechanical joint provided at a second point of articulation where the upper limb member meets the lower limb member); and a plurality of wheels connected to the plurality of limbs. Each lower limb member has a first wheel connected to a first end thereof and a second wheel connected to an opposing second end thereof. The second mechanical joint may be located between the first and second wheels.

This document also concerns method(s) for controlling or operating a mobile platform. The method(s) comprise(s): (i) causing, by a circuit, the mobile platform to traverse terrain; (ii) allowing rotation of a plurality of body parts of the chassis as the mobile platform traverses the terrain (wherein the chassis extends in a longitudinal direction from a back end to a front end and extends in lateral directions from a platform centerline to two opposing lateral sides); (iii) actuating, by the circuit, a first mechanical joint provided at a first point of articulation between the chassis and an upper limb member of a limb of a plurality of limbs coupled to the chassis; and (iv) actuating, by the circuit, a second mechanical joint provided at a second point of articulation where the upper limb member meets a lower limb member of the limb. Operation (i) can involve actuating at least one of a first wheel connected to a first end of the lower limb member and a second wheel connected to an opposing second end of the lower limb member. The second mechanical joint may be located between the first and second wheels.

### BRIEF DESCRIPTION OF THE DRAWINGS

This disclosure is facilitated by reference to the following drawing figures, in which like numerals represent like items throughout the figures, and in which:
FIG. 1 is an illustration of a system having a mobile platform.
FIG. 2 is an illustration of the mobile platform of FIG. 1.
FIG. 3 is another illustration of the mobile platform shown in FIGS. 1-2.
FIG. 4 is another illustration of the mobile platform shown in FIGS. 1-2.
FIG. 5 provides an illustration that is useful for understanding movement of the mobile platform shown in FIGS. 1-4.
FIG. 6 provides an illustration showing movement of the mobile platform over hilly terrain while maintaining the elongate length of the chassis aligned with a central axis.
FIG. 7 provides an illustration showing movement of the mobile platform over stepped terrain.
FIG. 8 provides an illustration that is useful for understanding the off-road driving mode of the mobile platform.
FIGS. 9A-9B (collectively referred to as "FIG. 9") provide illustrations that are useful for understanding the wheel tumbling mode of the mobile platform.
FIG. 10 provides an illustration that is useful for understanding the walking mode of the mobile platform.
FIG. 11 provides an illustration that is useful for understanding the climbing or whole-body maneuvering mode of the mobile platform.
FIGS. 12A-12B (collectively referred to as "FIG. 12") provide illustrations showing the mobile platform in a fully upright position and in an upright and outstretched position.
FIG. 13 provides an illustration that is useful for understanding turning of the mobile platform.
FIG. 14 provides an illustration that is useful for understanding a part interchangeability feature of the mobile platform.
FIG. 15 provides an illustration showing an offset position a mechanical joint between the upper and lower members of a limb of the mobile platform.
FIG. 16 provides a flow diagram of an illustrative method for operation and/or controlling a mobile platform.
FIG. 17 provides a block diagram of an illustrative computing device.

### DETAILED DESCRIPTION

It will be readily understood that the components of the systems and/or methods as generally described herein and illustrated in the appended figures could be arranged and designed in a wide variety of different configurations. Thus, the following more detailed description, as represented in the figures, is not intended to limit the scope of the present disclosure, but is merely representative of certain implementations in various different scenarios. While the various aspects are presented in the drawings, the drawings are not necessarily drawn to scale unless specifically indicated.

Unmanned ground vehicles (UGVs) need to be able to perform a variety of different tasks and operations without becoming unstable and tipping over. Various conventional approaches have been applied to solve this problem. For example, some conventional mobility platforms include wheels and tracks. These mobility platforms have relatively good endurance, payload capacity, speed, and mobility over different surfaces (e.g., mud and snow). However, they have relatively poor mobility on obstacles and in unstructured terrain. Other conventional mobility platforms include legs. These mobility platforms have relatively good mobility over different surfaces (e.g., mud and snow), on obstacles and in unstructured terrain. However, they have relatively poor endurance, payload capacity and speed. Therefore, current UGVs offer either mobility and agility or endurance and payload capacity, but not both.

The present solution provides a mobility platform implementing a hybrid approach that offers both of these things. In effect, the present solution has relatively good endurance, payload capacity, speed, mobility in mud and snow, and mobility in unstructured terrain. The solution is described below in greater detail.

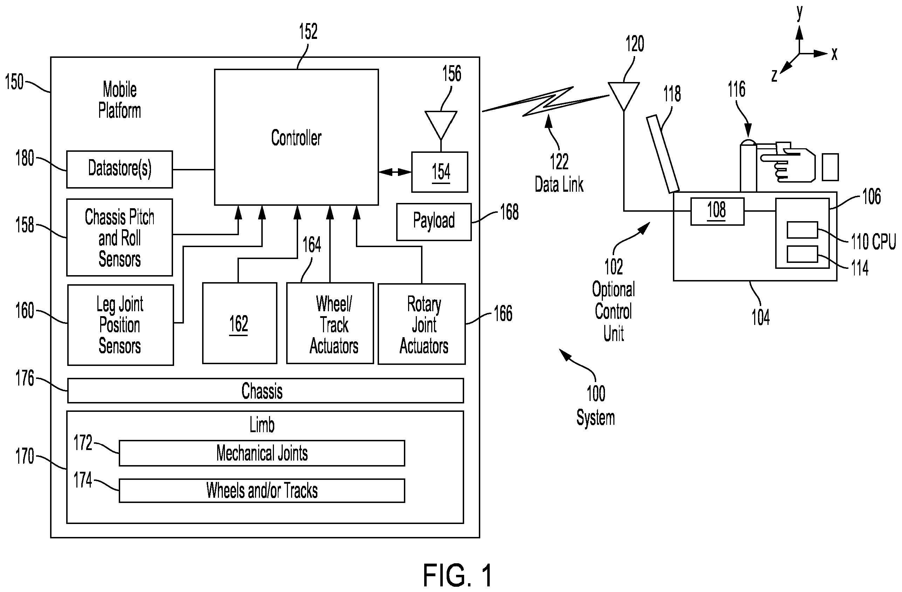

FIG. 1 provides a block diagram showing a system **100** that includes an optional control unit **102** and a mobile platform **150.** The illustration of the mobile platform **150** and control unit **102** is not drawn to scale. For example, the mobile platform **150** can be significantly larger than the control unit **102.** However, FIG. 1 is sufficient for understanding the present solution, and relationship between the two electronic components **102** and **150.**

The mobile platform **150** is a motorized vehicle that operates without an on-board human presence. The mobile platform **150** can be used in various applications, such as site security applications, inspection applications, search and rescue applications, emergency response applications, and/or ISR applications. The mobile platform **150** can include, but is not limited to, a UGV. The UGV can be used to, for example, transport a payload **168** to a particular destination location. The payload **168** can include, but is not limited to, an articulating arm. The mobile platform **150** may be configured to be autonomous, semi-autonomous, and/or remotely controllable via the control unit **102.** A data link **122** (e.g., a wireless data link) allows the control system **102** to communicate commands to the mobile platform **150,** and allows the control system **102** to receive information from the mobile platform **150.** For example, such information can include images from video cameras, haptic feedback data, and other information (e.g., battery related information) pertaining to the operational status of the mobile platform **150.**

The control unit **102** can include a user interface control **116,** data processing system **106,** and a data transceiver **108** to support the data link **122.** In some embodiments, user interface control **116** can sense hand movement along two or three linear directions of motion defined by orthogonal axes **x, y** and **z.** In this regard, the user interface control **116** can include, but is not limited to, a joystick. Forward movement of the joystick may cause forward movement of the mobile platform **150,** while backward movement of the joystick may cause backward movement of the mobile platform **150.** Right-side movement of the joystick may cause the mobile platform **150** to turn right, while left-side movement of the joystick may cause the mobile platform **150** to turn left. The present solution is not limited to this manner of controlling the mobile platform's movement. Any known or to be known vehicle motion control technique can be used herein.

Data processing system **106** includes a data processing hardware element **110.** The data processing element **110** can include, but is not limited to, a central processing unit (CPU) and/or an Application Specific Integrated Circuit (ASIC). The data processing system **106** can also include a memory or data storage device **114** for storing a set of instructions (e.g., software code). The instructions implement one or more of the methodologies, procedures, or functions described herein. The instructions can also reside, completely or at least partially, within the data processing element **110** during execution thereof thereby. The data processing element **110** and memory or data storage device **114** also can constitute machine-readable media.

The data processing system **106** may be fully integrated with the user interface control **116.** For example, the data processing system **106** could be integrated into a base **104** associated with the user interface control **116.** The data processing system **106** can be operatively connected to a display unit **118** for purposes of displaying video images. The display unit **118** may be integrated with the control system **106** as shown or separate from the control system **106.**

Data transceiver **108** is operatively coupled to the data processing system **106.** The data transceiver **108** can include any type of wired or wireless transceiver suitable for communicating data to and from a data transceiver **154** of the mobile platform **150.** If data transceivers **108, 154** are wireless devices then antennas **120, 156** can be respectively coupled to the data transceivers. A suitable wireless data link interface can be based on any of a variety of well-known wireless interface standards. Examples of such well known wireless interface standards can include the Bluetooth wireless standard, and the IEEE 802.11 family of standards. However, the invention is not limited in this regard and any other wireless interface standard can be used. Data communicated over the data link **122** can include motion control commands directed to mobile platform **150,** feedback data communicated from mobile platform **150** to the data processing system **106,** and video data communicated from the mobile platform **150** to the data processing system **106.**

The mobile platform **150** is a robot system capable of performing moving actions based on commands generated by an onboard controller **152** and/or telematic commands received from remote control unit **102.** Onboard controller **152** includes circuitry for generating motion control commands, processing received motion control commands, and/or communicating feedback data to the control unit **102.** The circuitry of the onboard controller **152** can include, but is not limited to, microprocessor(s), microcontroller(s), and/or ASIC(s). The circuitry of the onboard controller **152** is communicatively connected to datastore(s) **180** for accessing instructions and/or data useful for controlling operations of the mobile platform **150.** The on-board controller **152** is also configured to perform communication operations involving data transceiver **154.**

With reference to FIGS. 1-3, mobile platform **150** includes a chassis **176** with four limbs **170₁, 170₂, 170₃, 170₄** (collectively referred to as limbs **170)** coupled thereto. Chassis **176** comprises body parts **210, 212** and **214** that are coupled to each other. Although three body parts are shown in the drawings, the mobile platform can include any number of body parts selected in accordance with a given application. For example, the mobile platform can include two body parts rather than three body parts as shown.

Each body part **210, 212** and **214** is configured to be rotatable or twist about a platform centerline or axis **250** independent and separate from any rotation of the other body parts. The rotation of the body part can be passive or actively controlled by controller **152** and/or control unit **102.** The rotating or twisting of the body parts facilitates the prevention of side-toppling of the mobile platform on uneven terrain. The rotation or twisting of the body parts can be achieved using, for example, spring(s) and/or damper(s) on each rotary joint **260, 262** between two adjacent body parts. Machine learning algorithm(s) or model(s) can be used to autonomously control movement of the body parts relative to each other and relative to limb movements to reduce the likelihood of the mobile platform tipping over during operations. The machine learning algorithm(s) or model(s) can include, but are not limited to, neural networks.

Each body part **210, 212** and **214** can rotate or pivot *N°* or less around an axis **250.** *N* is any number between 1 and 360 selected in accordance with a given application. The body parts can be selectively configured at any time to rotate or pivot around axis **250** by the same amount or by different amounts. For example, at a first time, all body parts are configured to rotate *N*° around an axis **250.** However, at a second time, body part **210** is configured to rotate *N₁°* around an axis **250,** while body part **212** is configured to rotate *N₂°* around an axis **250.** *N₁* is not equal to *N₂*. Additionally or alternatively, the amount by which each body part rotates about axis **250** can be changed, modified or otherwise adjusted during operation of the mobile platform based on sensor data and/or certain criteria. For example, *N* is changed from a first value to a different second value based on a change in one or more characteristics of the surrounding environment and/or terrain over which the mobile platform is traveling.

Axis **250** extends from a front end **230** of the chassis **176** to a backend **232** of the chassis **176.** Chassis pitch and roll sensors **158** provide chassis pitch and roll angle information to the controller **152** for use in controlling movement of the limbs **176** and/or body parts **210-214.**

Each limb **170₁, 170₂, 170₃, 170₄** has one or more mechanical joints **172.** For example, limb **170₁** comprises mechanical joints **172₁₋₁, 172₁₋₂.** Limb **170₂** comprises mechanical joints **172₂₋₁, 172₂₋₂.** Limb **170₃** comprises mechanical joints **172₃₋₁, 172₃₋₂.** Limb **170₄** comprises mechanical joints **172₄₋₁, 172₄₋₂.**

Each mechanical joint **172₁₋₁, 172₂₋₁, 172₃₋₁, 172₄₋₁** is provided at the point of articulation between the chassis **176** and the respective upper limb member **206.** At this point of articulation, a proximal end **230** of the mechanical joint is rotably or pivotably coupled to the chassis **176** via a coupling means **234.** Coupling means **234** can include, but is not limited to, an axel, a pin, a shaft, gear(s), and/or a ball and socket. The upper limb member **206** can rotate 360° or less around an axis **252** which extends through this point of articulation. In this regard, an elongate body of the upper limb member **206** may extend parallel to axis **250** at a first time, extend perpendicular to axis **250** at a second time, and otherwise extend in a direction that is angled relative to axis **250** at a third time.

Each mechanical joint **172₁₋₂, 172₂₋₂, 172₃₋₂, 172₄₋₂** is provided at a point of articulation where the respective upper limb member **206** meets the respective lower limb member **208.** At this point of articulation, a distal end **232** of the upper limb member **206** is rotatably or pivotably coupled to the lower limb member **208** via a coupling means **242.** Coupling means **242** can include, but is not limited to, an axel, a pin, a shaft, gear(s), and/or a ball and socket.

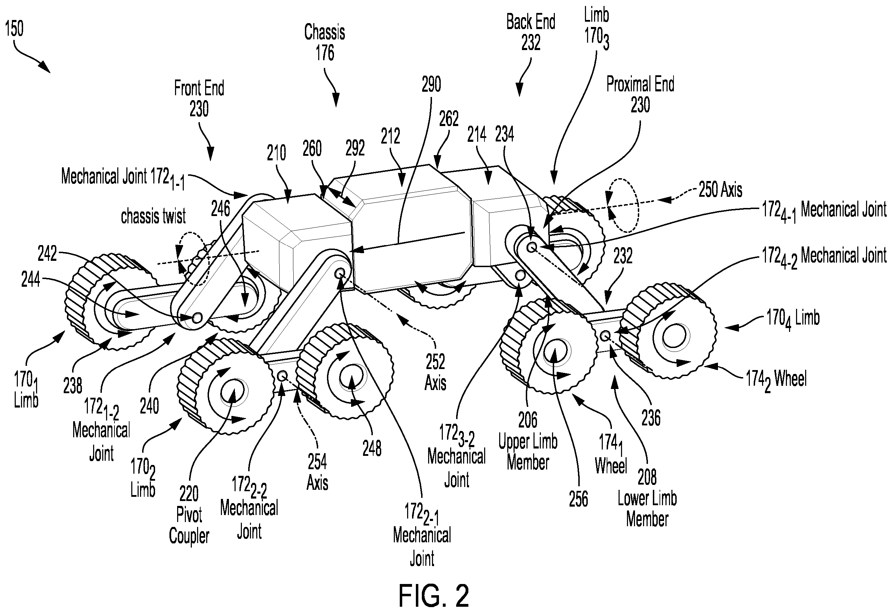

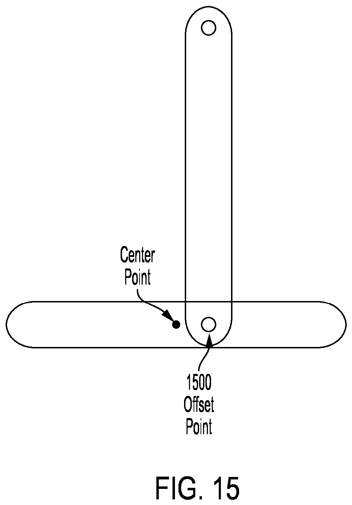

In the scenario shown in FIG. 2, the distal end **232** of the upper limb member **206** is rotatably or pivotably coupled to a center **236** of the lower limb member **208.** Thus, a first half **238** of the lower limb member **208** resides on one side of this point of articulation, while a second half **240** of the lower limb member **208** resides on the opposite side of this point of articulation. The present solution is not limited in this regard. As shown in FIG. 15, the distal end of the upper limb member is rotatably or pivotably coupled to the lower limb member at a point **1500** that is offset from center.

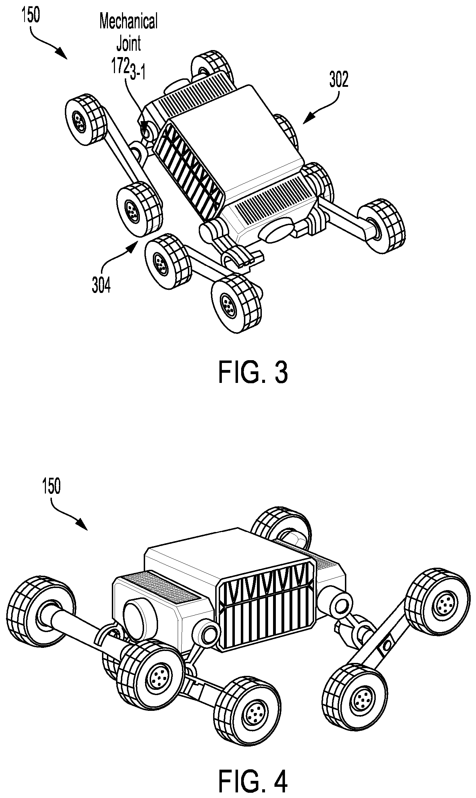

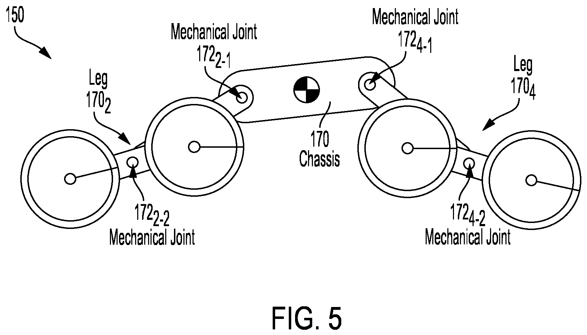

The lower limb member **208** can rotate ***M°*** around an axis **254** which extends through this point of articulation. ***M*** is any number between 1 and 360. The lower limb member **208** may be configured for continuous, unlimited rotation in both of two opposing direction. If ***M*** is 360 or 180, then an elongate body of the lower limb member **208** may extend parallel to axis **250** at a first time, extend perpendicular to axis **250** at a second time, and otherwise extend in a direction that is angled relative to axis **250** at a third time. Illustration are provided in FIGS. 3-5 which show different relative positions of the mechanical joints due to rotations thereof.

Movement of the mechanical joints **172** is controlled by controller **152** and/or control unit **102.** Rotary joint actuators **166** are provided to facilitate movement of the limbs **170** in accordance with motion control command signals. The rotary joint actuators **166** can include, but are not limited to, servo motors. Limb joint position sensors **160** provide position information with regard to one or more of the mechanical joints **172.** This position information is communicated from the limb joint position sensors **160** to the controller **152** and/or the control unit **102.** A limb joint position sensor can be provided at each mechanical joint **172₁₋₁, 172₂₋₁, 172₃₋₁, 172₄₋₁, 172₁₋₂, 172₂₋₂, 172₃₋₂, 172₄₋₂**.

The mobile platform **150** also includes other movable elements in the form of wheels and/or tracks **174.** In FIG. 2, each limb **170₁, 170₂, 170₃, 170₄** of the mobile platform **150** comprises at least two wheels **174₁, 174₂** pivotally connected thereto via couplers **256.** Couplers **256** can include, but are not limited to, axels, pins, shafts, and/or gears. A first wheel **174₁** is located at a first end **244** of the lower limb member **208,** while a second wheel **174₂** is located at an opposing second end **246** of the lower limb member **208.** Each wheel **174₁, 174₂** can rotate 360° in two opposing directions around a respective wheel pivot point **248.** Each wheel **174₁, 174₂** may be configured for unlimited rotation in both of two opposing direction.

The mobile platform **150** further comprises wheel/track actuators **164.** The wheel/track actuators **164** can include, but are not limited to, variable-speed, reversible electric motors mounted inside the chassis **176.** One or both of the wheels per limb can be actively rotated via the wheel/track actuators **164.** In one scenario, one of the wheels per limb can rotated freely while rotated of the other one of the wheels of the same limb is actively controlled by a wheel/track actuator **164.** In another scenario, rotation of both wheels of each limb is actively controlled by the wheel/track actuators **164.** One of the actuators **164** may be coupled to wheel **174₁** so that activation of this motor causes wheel **174₁** to rotate. Another one of the actuators **164** may be coupled to the rear wheel **174₂** so that activation of this motor causes the wheel **174₂** to rotate. Movement of the wheels **174₁, 174₂** by actuators **164** may be controlled by movement command signals from controller **152** and/or control unit **102.**

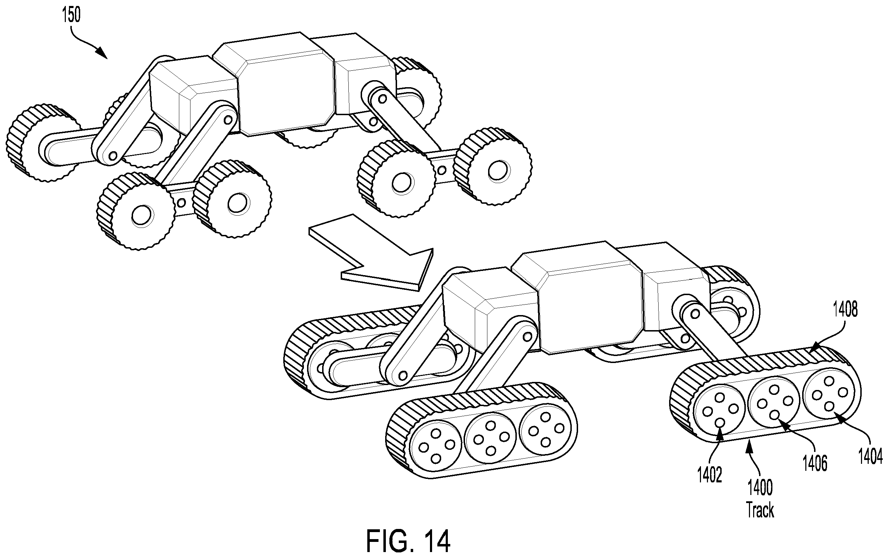

The wheels **174₁, 174₂** may be optionally replaced or interchanged with a track **1400** as shown in FIG. 14. Track **1400** comprises wheels **1402, 1404, 1406** coupled by way of a tread **1408.** Rotation of wheel **1202** and/or wheel **1204** drives the tread **1408,** which in turn causes the center wheel **1406** to rotate. Movement of the wheel(s) **1402, 1404** may be controlled by movement command signals from controller **152** and/or control unit **102.** The tracks **1400** allow the mobile platform to be selectively configured for improved operation in soft soil, mud and/or snow.

Other sensors **162** may be provided with the mobile platform **150** to indicate movement of the wheels **174, 1406.** Sensors **162** can include, but are not limited to, optical encoders, magnetic encoders, potentiometers, and resolvers. The outputs from the sensors **162** may be used by the controller **152** and/or control unit **102** for controlling movements of the mobile platform **150.** Sensors **162** may also include environmental sensors, camera(s), a lidar system, and/or a radar system. These sensors can be used to detect characteristics of a surrounding environments and/or detect objects in proximity to the mobile platform **150.** Any known or to be known object detection technique can be used here.

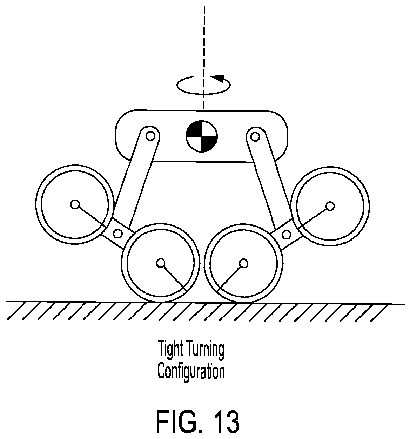

The position of the mobile platform **150** is controlled through the selective activation and deactivation of the actuators **164** in response to control inputs generated by controller **152** and/or control unit **102.** Linear or straight-line travel of the mobile platform **150** is effectuated by the simultaneous activation of actuators **164** in the same direction and at the same speed so as to drive wheels and tracks **174** in the same direction and at the same speed. Turning of the mobile platform **150** can be achieved by: (1) simultaneously activating the actuators for wheels of the limbs **170₁, 170₂** on a first side of the mobile platform **150** and actuators for wheels of the limbs **170₂, 170₄** on a second side of the mobile platform **150** in opposite directions or in the same direction at different speeds; (2) operating actuators for only one of the limbs; (3) rotating mechanical joints **172₁₋₂, 17₂₋₂, 172₃₋₂, 172₄₋₂** such that the outermost wheel (e.g., wheels **174₂)** of each limb is raised off the ground and the innermost wheel (e.g., wheels **174₁)** of each limb remains in contact with the ground (as shown in FIG. 13) and then simultaneously activating the actuators for innermost wheels of the limbs **170₁, 170₂** on a first side of the mobile platform **150** and actuators for the innermost wheels of the limbs **170₂, 170₄** on a second side of the mobile platform **150** in opposite directions or in the same direction at different speeds; or (4) rotating mechanical joints **172₁₋₂, 17₂₋₂, 172₃₋₂, 172₄₋₂** such that the outermost wheel (e.g., wheels **174₂)** of each limb is raised off the ground and the innermost wheel (e.g., wheels **174₁)** of each limb remains in contact with the ground (as shown in FIG. 13) and then operating actuators for only one of the limbs.

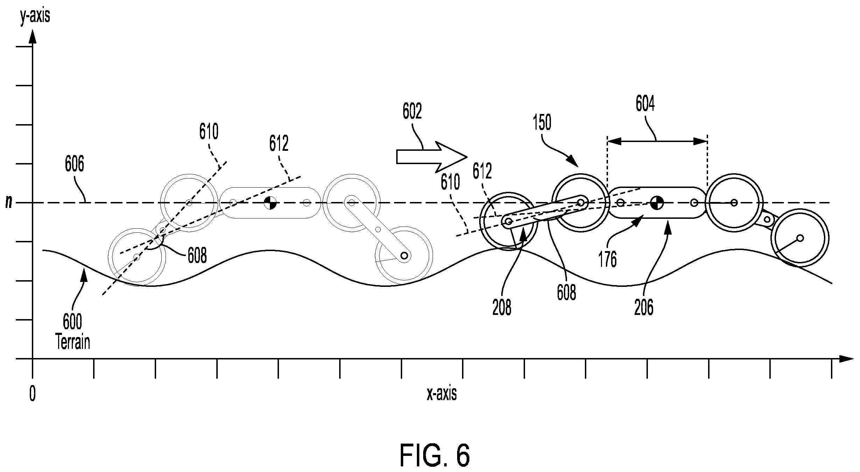

FIG. 6 provides an illustration showing movement of the mobile platform **150** over hilly terrain **600** while maintaining the central axis **250** and elongate length **604** of the chassis **176** aligned with a reference line **606** extending horizontally relative to an x-axis and having a constant value ***n*** on an y-axis. The x-axis can be referred as the horizontal axis, while the y-axis can be referred to as the vertical axis. Arrow **602** represents the mobile platform's direction of travel. This is achieved by continuously adjusting the relative positions of the mechanical joints **172** of the four limbs **170** responsive to changes in elevation and/or elevated slope of the terrain **600.** As the terrain's elevation increases, the angle **608** between an elongate central axis **610** of lower limb member **208** and an elongate central axis **612** of the upper limb member **206** increases as seen in FIG. 6. As the terrain's elevation decreases, the angle **608** between an elongate central axis **610** of lower limb member **208** and an elongate central axis **612** of the upper limb member **206** decreases as also seen in FIG. 6.

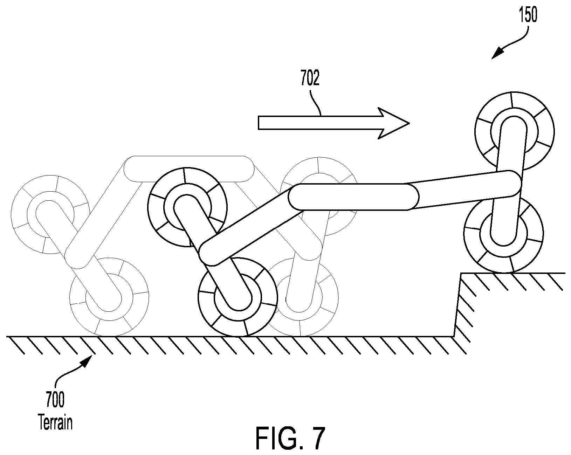

FIG. 7 provides an illustration showing movement of the mobile platform **150** over stepped terrain **700.** Arrow **702** represents the mobile platform's direction of travel.

The combination of wheels and jointed limbs enables a variety of operational modes for the mobile platform **150.** These operational modes can include, but are not limited to, a road driving mode, an off-road driving mode, a wheel tumbling mode, a walking mode, and a climbing or whole body maneuvering mode. These operational modes provide the mobile platform with an increased battery life as compared to conventional mobile platforms, relatively higher energy efficiency as compared to conventional mobile platforms, the ability to carry relatively heavier payloads as compared to conventional mobile platforms, a relatively simpler control system as compared to conventional mobile platforms, and an ability to climb obstacles that conventional mobile platforms cannot traverse.

The mobile platform can switch between modes responsive to user-software interaction via the control unit **102** and/or autonomously based on sensor data obtained by sensors **162** thereof. For example, the mobile platform **150** can switch from the road driving mode to the wheel tumbling mode when an analysis of the sensor data indicates that stairs reside in the path of travel of the mobile platform. The mobile platform **150** can switch from the road driving mode to the climbing mode when a relatively tall obstruction resides in the path of travel of the mobile platform. The present solution is not limited to the particulars of these examples.

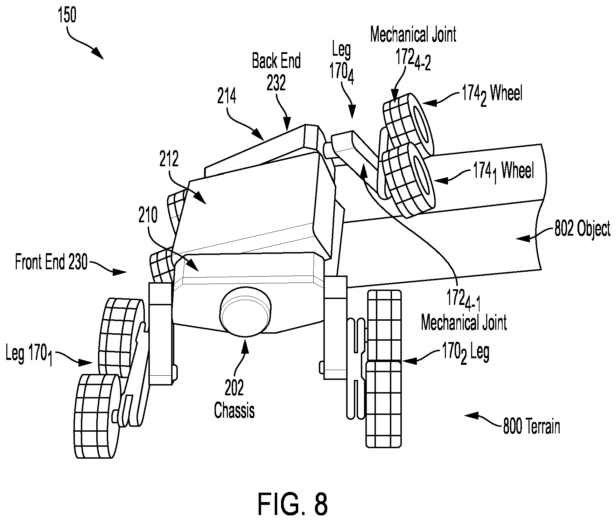

FIG. 8 provides an illustration that is useful for understanding the off-road driving mode of the mobile platform **150.** The mobile platform **150** is traveling over terrain **800** with an object **802** in the path of travel thereof. The limbs **170** and chassis **176** perform movements to traverse the object **802.** These movements can include, but are not limited to, rotation of wheels **174,** rotation of each limb's mechanical joint(s) **172,** and the twisting of the chassis body parts **210-214.** In this mode, the rotary joint actuators **166** associated with the upper mechanical joints **172₁₋₁, 172₂₋₁, 172₃₋₁, 172₄₋₁** may be locked so as to maintain the upper mechanical joints at fixed angles, while the rotary joint actuators **166** associated with the lower mechanical joints **172₁₋₂, 172₂₋₂, 172₃₋₂, 172₄₋₂** are allowed to freely spin or otherwise rotate. The wheel actuators are actively controlled to spin or otherwise rotate the wheels **174.** The advantages of the off-road mode include, but are not limited to, high energy efficiency since the rotary joint actuators **166** do not draw power, and/or the provision of suspension by the flex of the upper and lower mechanical joints **172** which facilitates improved mobility on moderate terrain.

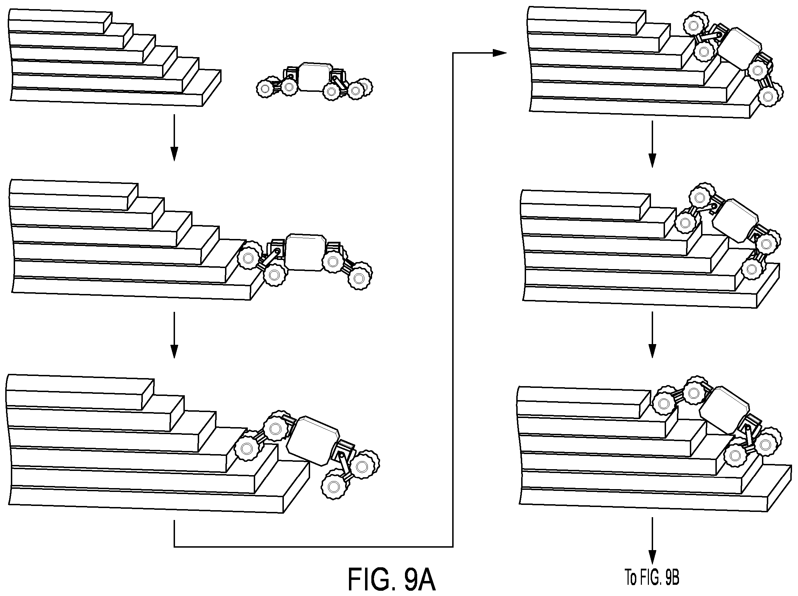

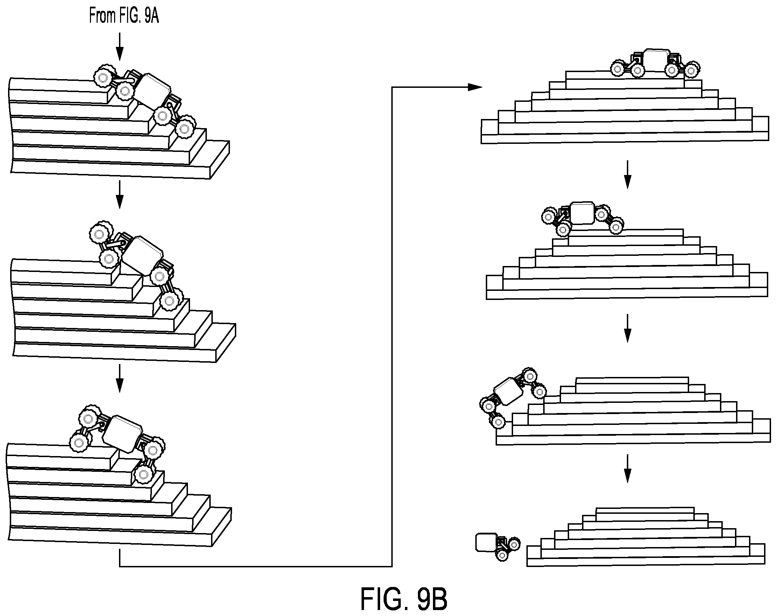

FIG. 9 provides illustrations that are useful for understanding the wheel tumbling mode of the mobile platform **150.** The mobile platform **150** is traveling over terrain **800** with an object **802** in the path of travel thereof. The limbs **170** and chassis **176** perform movements to traverse the object **802.** These movements can include, but are not limited to, rotation of wheels **174,** rotation of each limb's mechanical joint(s) **172,** and the twisting of the chassis body parts **210-214.** This operational mode involves: locking the rotary joint actuators **166** associated with the upper mechanical joints **172₁₋₁, 172₂₋₁, 172₃₋₁, 172₄₋₁** so as to maintain the upper mechanical joints at fixed angles; configuring the wheel and/or track actuators **164** to remain stationary or only be allowed relatively small or minor rotation; and configuring the rotary joint actuators **166** to allow for continuous rotation of the lower mechanical joints **172₁₋₂, 172₂₋₂, 172₃₋₂, 172₄₋₂.** The advantages of the off-road mode include, but are not limited to, high energy efficiency since the rotary joint actuators **166** associated with the upper mechanical joints do not draw power, allowing relatively heavy payloads to be carried by the mobile platform due to the low speed and high torque of the lower mechanical joints, and allowing for a relatively simple movement control system since there is no requirement for relatively complex footsteps to be made by the mobile platform.

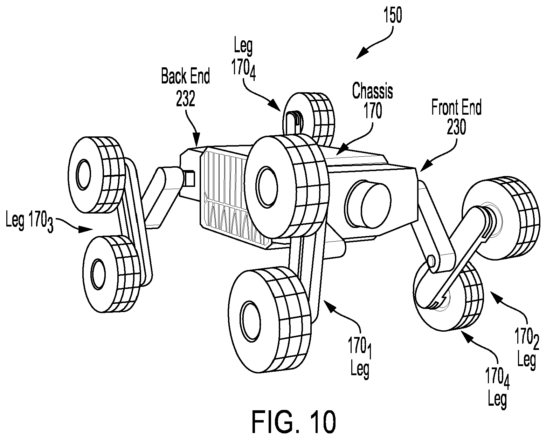

FIG. 10 provides an illustration that is useful for understanding the walking mode of the mobile platform **150.** This mode involves: raising one wheel per limb off the ground; preventing the lifted limbs from coming in contact with the ground; configuring the rotary joint actuators **166** associated with the upper and lower mechanical joints to be active for enabling stepping over objects; and/or configuring the wheel and/or track actuators **164** to be active for enabling spinning of the wheels, steering and/or turning. The advantages of the walking mode include, but are not limited to, the provision of mobility of walking by the mobile platform, and the provision of novel behaviors by the mobile platform. The novel behaviors include, but are not limited to, switching mid-stride which wheel of a limb is to be in contact with the ground.

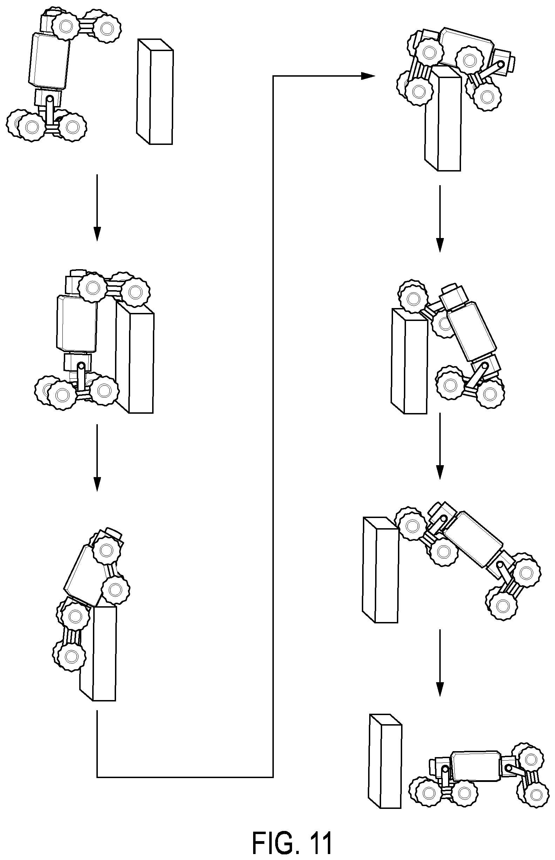

FIG. 11 provides an illustration that is useful for understanding the climbing or whole-body maneuvering mode of the mobile platform **150.** This mode involves: combined use of all the mechanical joints **172** of the limbs **170** and chassis **176;** and complex behaviors that may be autonomously synthesized by the controller **152.** The advantages of the climbing or whole-body maneuvering mode include, but are not limited to, the provision of an ability to climb obstacles that cannot be traversed by existing mobile platforms.

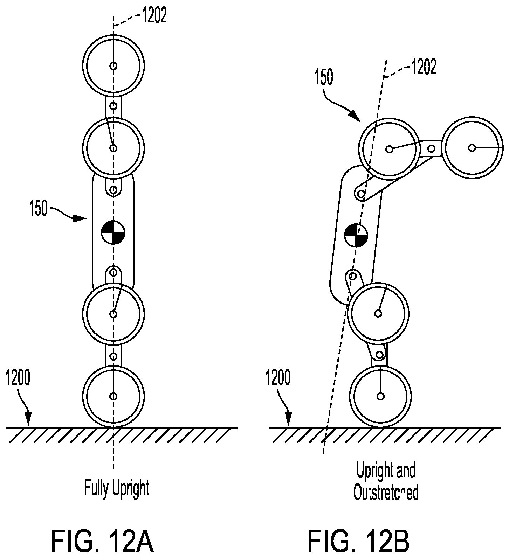

FIG. 12 provides illustrations showing other positions that the mobile platform **150** can have as a result of actuation of the mechanical joints **172** of the limbs **170.** The mobile platform **150** can be placed in a position in which center axis of the limbs **170** and chassis **176** are aligned with each other so that the mobile platform extends fully upright or vertical relative to ground **1200** as shown in FIG. 12A. In the fully upright or vertical position, the limbs and wheels on a first end (e.g., front end) of the mobile platform are raised in the air and arranged so as to be aligned with the limbs and wheels on a second end (e.g., back end) of the mobile platform adjacent to ground **1200.** The elongate center axis **122** of the chassis extend perpendicular to ground.

The mobile platform **150** is configured to adjust its overall shape to counterbalance changes in weight distribution when limb(s) at least partially extend(s) horizontal to the ground **1200** as shown in FIG. 12B. This feature of the mobile platform facilitates transitioning of the mobile platform to/from the upright position shown in FIG. 12A and to/from at least partially upright positions (such as that shown in FIG. 12B) without overturning.

The mobile platform **150** has many novel features. These novel features include, but are not limited to: (i) an ability to have multiple modes of locomotion (e.g., rolling with passive suspension, tumbling wheel pairs, walking, and whole-body climbing); and (ii) an ability to achieve combinations of mobility, endurance and payload capacity. With regard to feature (ii), the off-road driving of the mobile platform with wheels is high energy-efficient which results in a significant improvement in system endurance as compared to conventional legged mobile platform. The passive suspension elements and large ground contact patch allows the mobile platform to outperform legged platforms with wheels. The mobile platform is able to carry significant loads because of the primary mobility mode is wheels driving rather than walking. Carrying heavy loads does not meaningfully impact system endurance. The advanced mobility modes (e.g., tumbling mode, walking mode, and climbing mode) provide the mobile platform with the ability to traverse a wide range of obstacles. These operations modes allow the mobile platform to outperform conventional wheeled and tracked systems.

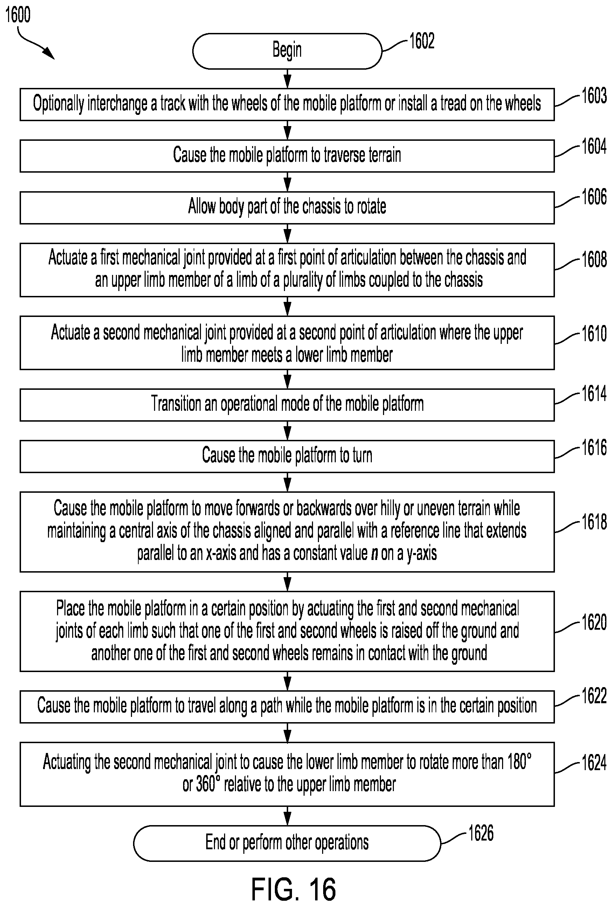

FIG. 16 provides a flow diagram of an illustrative method **1600** for controlling or otherwise operating a mobile platform (e.g., mobile platform **150** of FIGS. 1-2). Method **1600** begins with **1602** and continues with **1603** where the first and second wheels are optionally interchanged with a track (e.g., track **1400** of FIG. 14) or a tread (e.g., tread **1408** of FIG. 14) is installed on the wheels.

In **1604,** a circuit (e.g., control unit **102,** controller **152,** actuators **164,** transceiver **154,** and/or wheels and/or tracks **174** of FIG. 1) cause the mobile platform to traverse terrain (e.g., terrain **600** of FIG. 6, **700** of FIG. 7, and/or **800** of FIG. 8, ). This may be achieved, for example, by causing the mobile platform to traveling forwards or backwards. Movement of the mobile platform can involve actuating at least one of a first wheel (e.g., wheel **174₁** of FIGS. 1-2) connected to a first end (e.g., end **238** of FIG. 2) of a lower limb member (e.g., lower limb member **208** of FIG. 2) and a second wheel (e.g., wheel **174₂** of FIG. 2) connected to an opposing second end (e.g., end **240** of FIG. 2) of the lower limb member. Actuation of the first wheel is performed independent of actuation of the second wheel. Additionally or alternatively, the first and second wheels may be actuated simultaneously as a pair of wheels.

In **1606,** a plurality of body parts (e.g., body parts **210, 212** and/or **214** of FIG. 2) of the chassis (e.g., chassis **176** of FIGS. 1-2) are allowed to rotate as the mobile platform traverses the terrain. The body parts may include, but are not limited to, a front body part, a back body part, and/or a center body part rotatably coupled between the front and back body part. The chassis extends in a longitudinal direction (e.g., direction **290** of FIG. 3) from a back end (e.g., back end **232** of FIG. 2) to a front end (e.g., front end **230** of FIG. 30 and extending in lateral directions (e.g., lateral directions **292** of FIG. 2) from a platform centerline (e.g., centerline **250** of FIG. 2) to two opposing lateral sides (e.g., sides **302, 304** of FIG. 3). Each body part rotates around a center axis (e.g., axis **250** of FIG. 2) that extends from the back end of the chassis to the front end of the chassis. The body parts may be configured to rotate in the same direction and different directions relative to each other at any given time. The rotation of the body parts can be passive or active. In the active scenarios, the circuit performs operations to actuate a rotary joint provided between two adjacent body parts. Any known or to be known rotary joint can be used here.

In **1608,** the circuit performs operations to actuate a first mechanical joint (e.g., mechanical joint **172₁₋₁, 172₂₋₁, 172₃₋₁, 172₄₋₁** of FIG. 2) provided at a first point of articulation between the chassis and an upper limb member (e.g., upper limb member **206** of FIG. 2) of a limb (e.g., limb **170₁, 170₂, 170₃** or **170₄** of FIGS. 1-2) coupled to the chassis. The circuit also performs operations in **1610** to actuate a second mechanical joint (e.g., mechanical joint **172₁₋₂, 172₂₋₂, 172₃₋₂, 172₄₋₂** of FIG. 2) provided at a second point of articulation where the upper limb member meets a lower limb member (e.g., lower limb member **208** of FIG. 2). The second mechanical joint is located between the first and second wheels. For example, the second mechanical joint is located midway between the first and second wheels. The first mechanical joint rotates about a first axis (e.g., axis **252** of FIG. 2). The second mechanical joint rotates about a second axis (e.g., axis **254** of FIG. 2) that is parallel to the first axis.

The operations of **1608-1610** may be performed for each limb of the mobile platform. In some scenarios, four limbs are provided with the mobile platform. A first limb and a second limb are coupled to the front end of the chassis on opposing sides of the mobile platform, and a third limb and a fourth limb are coupled to the back end of the chassis on the opposing sides of the mobile platform. The present solution is not limited to the particulars of this scenario.

The system transitions an operational mode of the mobile platform in **1614.** This transition may be selectively performed based on defined criteria (e.g., tread(s) and/or track(s) has(have) been installed) and/or based on sensed conditions or characteristics of a surrounding environment (e.g., there is hill, stairs, obstacle, mud, snow or ice detected by the mobile platform in the path of travel thereof). The operational modes of the mobile platform include, but are not limited to, a road driving mode, an off-road driving mode, a wheel tumbling mode, a walking mode, and a climbing mode.

In **1616,** the circuit causes the mobile platform to turn. Turning of the mobile platform can be achieved by: rotating the first and second mechanical joints such that an outermost wheel (e.g., wheel **174₂** of FIG. 2) of the first and second wheels of each limb is raised off the ground and an innermost wheel (e.g., **174₁** of FIG. 2) of the first and second wheels of each limb remains in contact with the ground; and simultaneously actuating the innermost wheels on a first side of the mobile platform and actuating the innermost wheels on a second side of the mobile platform in opposite directions or in the same direction at different speeds. Turning of the mobile platform can also be achieved by: rotating the first and second mechanical joints such that an outermost wheel of the first and second wheels of each limb is raised off the ground and an innermost wheel of the first and second wheels of each limb remains in contact with the ground; and actuating only one of the innermost wheels.

In **1618,** the circuit performs operations to cause an actuation of the first and second mechanical joints of each limb to cause the mobile platform to move forwards or backwards over hilly or uneven terrain (e.g., terrain **600** of FIG. 6) while maintaining a central axis (e.g., axis **250** of FIG. 2) of the chassis aligned and parallel with a reference line (e.g., line **606** of FIG. 6) that extends parallel to an x-axis and has a constant value ***n*** on a y-axis.

In **1620-1622,** the circuit performs operations to: place the mobile platform in a certain position by actuating the first and second mechanical joints of each limb such that one of the first and second wheels is raised off the ground and another one of the first and second wheels remains in contact with the ground; and cause the mobile platform to travel along a path while the mobile platform is in the certain position.

In **1624,** the circuit performs operations to actuate the second mechanical joint to cause the lower limb member to rotate more than 180° or 360° relative to the upper limb member. Subsequently, method **1600** continues with **1626** where it ends or other operations are performed (e.g., return to **1602).**

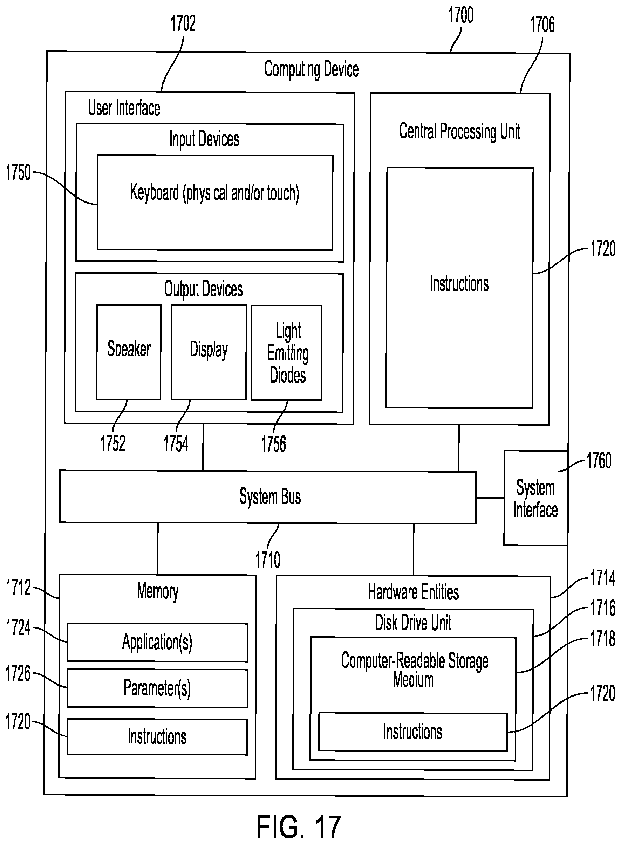

Referring now to FIG. 17, there is provided an illustration of an illustrative architecture for a computing device **1700.** The controller **106** of FIG. 1 and/or controller **152** of FIG. 1 is/are the same as or similar to computing device **1700.** As such, the discussion of computing device **1700** is sufficient for understanding the controllers **106, 152** of FIG. 1.

Computing device **1700** may include more or less components than those shown in FIG. 17. However, the components shown are sufficient to disclose an illustrative solution implementing the present solution. The hardware architecture of FIG. **17** represents one implementation of a representative computing device configured to operate a vehicle, as described herein. As such, the computing device **1700** of FIG. **17** implements at least a portion of the method(s) described herein.

Some or all components of the computing device **1700** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. **17****,** the computing device **1700** comprises a user interface **1702,** a Central Processing Unit (CPU) **1706,** a system bus **1710,** a memory **1712** connected to and accessible by other portions of computing device **1700** through system bus **810,** a system interface **1760,** and hardware entities **1714** connected to system bus **1710.** The user interface can include input devices and output devices, which facilitate user-software interactions for controlling operations of the computing device **1700.** The input devices include, but are not limited to, a physical and/or touch keyboard **1750.** The input devices can be connected to the computing device **1700** via a wired or wireless connection (e.g., a Bluetooth^{®} connection). The output devices include, but are not limited to, a speaker **1752,** a display **1754,** and/or light emitting diodes **1756.** System interface **1760** is configured to facilitate wired or wireless communications to and from external devices (e.g., network nodes such as access points, etc.).

At least some of the hardware entities **1714** perform actions involving access to and use of memory **1712,** which can be a Random Access Memory (RAM), a disk drive, flash memory, a Compact Disc Read Only Memory (CD-ROM) and/or another hardware device that is capable of storing instructions and data. Hardware entities **1714** can include a disk drive unit **1716** comprising a computer-readable storage medium **1718** on which is stored one or more sets of instructions **1720** (e.g., software code) configured to implement one or more of the methodologies, procedures, or functions described herein. The instructions **1720** can also reside, completely or at least partially, within the memory **1712** and/or within the CPU **1706** during execution thereof by the computing device **1700.** The memory **1712** and the CPU **1706** also can constitute machine-readable media. The term "machine-readable media", as used here, refers to a single medium or multiple media (e.g., a centralized or distributed database, and/or associated caches and servers) that store the one or more sets of instructions **1720.** The term "machine-readable media", as used here, also refers to any medium that is capable of storing, encoding or carrying a set of instructions **1720** for execution by the computing device **1700** and that cause the computing device **1700** to perform any one or more of the methodologies of the present disclosure.

Reference throughout this specification to features, advantages, or similar language does not imply that all of the features and advantages that may be realized should be or are in any single embodiment. Rather, language referring to the features and advantages is understood to mean that a specific feature, advantage, or characteristic described in connection with a particular implementation is included in at least one embodiment. Thus, discussions of the features and advantages, and similar language, throughout the specification may, but do not necessarily, refer to the same embodiment.

Furthermore, the described features, advantages and characteristics disclosed herein may be combined in any suitable manner. One skilled in the relevant art will recognize, in light of the description herein, that the disclosed systems and/or methods can be practiced without one or more of the specific features. In other instances, additional features and advantages may be recognized in certain scenarios that may not be present in all instances.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

Although the systems and methods have been illustrated and described with respect to one or more implementations, equivalent alterations and modifications will occur to others skilled in the art upon the reading and understanding of this specification and the annexed drawings. In addition, while a particular feature may have been disclosed with respect to only one of several implementations, such feature may be combined with one or more other features of the other implementations as may be desired and advantageous for any given or particular application. Thus, the breadth and scope of the disclosure herein should not be limited by any of the above descriptions. Rather, the scope of the invention should be defined in accordance with the following claims and their equivalents.

Without excluding further possible embodiments, certain example embodiments are summarized in the following clauses:
Clause 1: A mobile platform, comprising: a chassis which extends in a longitudinal direction from a back end to a front end and extends in lateral directions from a platform centerline to two opposing lateral sides, the chassis comprising a plurality of body parts configured to rotate relative to each other; a plurality of limbs coupled to the chassis, each limb of said limbs comprising an upper limb member, a lower limb member, a first mechanical joint provided at a first point of articulation between the chassis and the upper limb member, and a second mechanical joint provided at a second point of articulation where the upper limb member meets the lower limb member; and a plurality of wheels connected to the plurality of limbs; wherein each said lower limb member has a first wheel connected to a first end thereof and a second wheel connected to an opposing second end thereof; and wherein the second mechanical joint is located between the first and second wheels
Clause 2: The mobile platform according to Clause 1, further comprising a rotary joint provided between a first body part of the plurality of body parts and a second body part of the plurality of body parts.
Clause 3: The mobile platform according to any preceding clause, wherein the rotary joint is configured to allow the plurality of body parts to passively rotate relative to each other.
Clause 4: The mobile platform according to any preceding clause, wherein the plurality of body parts comprises a front body part, a back body part and a center body part rotatably coupled between the front and back body parts.
Clause 5: The mobile platform according to any preceding clause, wherein each of the plurality of body parts rotates around a center axis that extends from the back end of the chassis to the front end of the chassis.
Clause 6: The mobile platform according to any preceding clause, wherein the plurality of body parts are configured to rotate in the same direction and different directions relative to each other at any given time.
Clause 7: The mobile platform according to any preceding clause, wherein a first limb and a second limb are coupled to the front end of the chassis on opposing sides of the mobile platform, and a third limb and a fourth limb are coupled to the back end of the chassis on the opposing sides of the mobile platform.
Clause 8: The mobile platform according to any preceding clause, wherein the first mechanical joint rotates about a first axis and the second mechanical joint rotates about a second axis that is parallel to the first axis.
Clause 9: The mobile platform according to any preceding clause, wherein the second mechanical joint is located midway between the first and second wheels.
Clause 10: The mobile platform according to any preceding clause, further comprising: at least one wheel actuator configured to actuate the first and second wheels; wherein actuation of the first wheel is performed independent of actuation of the second wheel, or actuation of the first and second wheels.
Clause 11: The mobile platform according to any preceding clause, further comprising at least one wheel actuator configured to actuate the first and second wheels simultaneously as a pair of wheels.
Clause 12: The mobile platform according to any preceding clause, further comprising a track configured to be interchanged with the first and second wheels.
Clause 13: The mobile platform according to any preceding clause, further comprising a tread configured to be installed on the first and second wheels.
Clause 14: The mobile platform according to any preceding clause, further comprising a control circuit configured to selectively transition an operational mode of the mobile platform based on sensed conditions or characteristics of a surrounding environment.
Clause 15: The mobile platform according to any preceding clause, wherein the operational modes comprise a road driving mode, an off-road driving mode, a wheel tumbling mode, a walking mode, and a climbing mode.
Clause 16: The mobile platform according to any preceding clause, further comprising a control circuit configured to cause the mobile platform to turn by: rotating the first and second mechanical joints such that an outermost wheel of the first and second wheels of each limb is raised off the ground and an innermost wheel of the first and second wheels of each limb remains in contact with the ground; and simultaneously actuating the innermost wheels on a first side of the mobile platform and actuating the innermost wheels on a second side of the mobile platform in opposite directions or in the same direction at different speeds.
Clause 17: The mobile platform according to any preceding clause, further comprising a control circuit configured to cause the mobile platform to turn by: rotating the first and second mechanical joints such that an outermost wheel of the first and second wheels of each limb is raised off the ground and an innermost wheel of the first and second wheels of each limb remains in contact with the ground; and actuating only one of the innermost wheels.
Clause 18: The mobile platform according to any preceding clause, further comprising actuating the first and second mechanical joints of each said limb to cause the mobile platform to move forwards or backwards over hilly or uneven terrain while maintaining a central axis of the chassis aligned and parallel with a reference line that extends parallel to an x-axis and has a constant value n on a y-axis.
Clause 19: The mobile platform according to any preceding clause, further comprising a control circuit configured to place the mobile platform in a certain position by actuating the first and second mechanical joints of each limb such that one of the first and second wheels is raised off the ground and another one of the first and second wheels remains in contact with the ground, and cause the mobile platform to travel along a path while the mobile platform is in the certain position.
Clause 20: The mobile platform according to any preceding clause, further comprising actuating the second mechanical joint to cause the lower limb member to rotate more than 180° or 360° relative to the upper limb member.
Clause 21: A method for controlling a mobile platform, comprising: causing, by a circuit, the mobile platform to traverse terrain; allowing rotation of a plurality of body parts of the chassis as the mobile platform traverses the terrain, the chassis extending in a longitudinal direction from a back end to a front end and extending in lateral directions from a platform centerline to two opposing lateral sides; actuating, by the circuit, a first mechanical joint provided at a first point of articulation between the chassis and an upper limb member of a limb of a plurality of limbs coupled to the chassis; actuating, by the circuit, a second mechanical joint provided at a second point of articulation where the upper limb member meets a lower limb member of the limb; wherein said causing comprises actuating at least one of a first wheel connected to a first end of the lower limb member and a second wheel connected to an opposing second end of the lower limb member; and wherein the second mechanical joint is located between the first and second wheels.
Clause 22. The method according to Clause 21, further comprising actuating a rotary joint provided between a first body part of the plurality of body parts and a second body part of the plurality of body parts.
Clause 23: The method according to any preceding method clause, wherein said rotation of the plurality of body parts is passive.
Clause 24: The method according to any preceding method clause, wherein the plurality of body parts comprises a front body part, a back body part and a center body part rotatably coupled between the front and back body parts.
Clause 26: The method according to any preceding method clause, wherein each of the plurality of body parts rotates around a center axis that extends from the back end of the chassis to the front end of the chassis.
Clause 27: The method according to any preceding method clause, wherein the plurality of body parts are configured to rotate in the same direction and different directions relative to each other at any given time.
Clause 28: The method according to any preceding method clause, wherein a first limb and a second limb are coupled to the front end of the chassis on opposing sides of the mobile platform, and a third limb and a fourth limb are coupled to the back end of the chassis on the opposing sides of the mobile platform.
Clause 29: The method according to any preceding method clause, wherein the first mechanical joint rotates about a first axis and the second mechanical joint rotates about a second axis that is parallel to the first axis.
Clause 30: The method according to any preceding method clause, wherein the second mechanical joint is located midway between the first and second wheels.
Clause 31: The method according to any preceding method clause, wherein actuation of the first wheel is performed independent of actuation of the second wheel.
Clause 32: The method according to any preceding method clause, wherein the first and second wheels are actuated simultaneously as a pair of wheels.
Clause 33: The method according to any preceding method clause, further comprising interchanging a track with the first and second wheels.
Clause 34: The method according to any preceding method clause, further comprising installing a tread on the first and second wheels.
Clause 35: The method according to any preceding method clause, further comprising selectively transitioning an operational mode of the mobile platform based on sensed conditions or characteristics of a surrounding environment.
Clause 36: The method according to any preceding method clause, wherein the operational modes comprise a road driving mode, an off-road driving mode, a wheel tumbling mode, a walking mode, and a climbing mode.
Clause 37: The method according to any preceding method clause, further comprising causing the mobile platform to turn by: rotating the first and second mechanical joints such that an outermost wheel of the first and second wheels of each limb is raised off the ground and an innermost wheel of the first and second wheels of each limb remains in contact with the ground; and simultaneously actuating the innermost wheels on a first side of the mobile platform and actuating the innermost wheels on a second side of the mobile platform in opposite directions or in the same direction at different speeds.
Clause 38: The method according to any preceding method clause, further comprising causing the mobile platform to turn by: rotating the first and second mechanical joints such that an outermost wheel of the first and second wheels of each limb is raised off the ground and an innermost wheel of the first and second wheels of each limb remains in contact with the ground; and actuating only one of the innermost wheels.
Clause 39: The method according to any preceding method clause, further comprising actuating the first and second mechanical joints of each said limb to cause the mobile platform to move forwards or backwards over hilly or uneven terrain while maintaining a central axis of the chassis aligned and parallel with a reference line that extends parallel to an x-axis and has a constant value n on a y-axis.
Clause 40: The method according to any preceding method clause, further comprising placing the mobile platform in a certain position by actuating the first and second mechanical joints of each limb such that one of the first and second wheels is raised off the ground and another one of the first and second wheels remains in contact with the ground, and cause the mobile platform to travel along a path while the mobile platform is in the certain position.
Clause 41: The method according to any preceding method clause, further comprising actuating the second mechanical joint to cause the lower limb member to rotate more than 180° or 360° relative to the upper limb member.

The breadth and scope of this disclosure should not be limited by any of the above-described example embodiments, but should be defined only in accordance with the following claims and their equivalents.

## Claims

1. A mobile platform, comprising:
a chassis which extends in a longitudinal direction from a back end to a front end and extends in lateral directions from a platform centerline to two opposing lateral sides, the chassis comprising a plurality of body parts configured to rotate relative to each other;
a plurality of limbs coupled to the chassis, each limb of said limbs comprising an upper limb member, a lower limb member, a first mechanical joint provided at a first point of articulation between the chassis and the upper limb member, and a second mechanical joint provided at a second point of articulation where the upper limb member meets the lower limb member; and
a plurality of wheels connected to the plurality of limbs;
wherein each said lower limb member has a first wheel connected to a first end thereof and a second wheel connected to an opposing second end thereof; and
wherein the second mechanical joint is located between the first and second wheels.

2. The mobile platform according to claim **1,** further comprising a rotary joint provided between a first body part of the plurality of body parts and a second body part of the plurality of body parts.

3. The mobile platform according to claim **1,** wherein the rotary joint is configured to allow the plurality of body parts to passively rotate relative to each other.

4. The mobile platform according to claim 1, wherein the plurality of body parts comprises a front body part, a back body part and a center body part rotatably coupled between the front and back body parts.

5. The mobile platform according to claim **1,** wherein each of the plurality of body parts rotates around a center axis that extends from the back end of the chassis to the front end of the chassis.

6. The mobile platform according to claim 1, wherein the plurality of body parts are configured to rotate in the same direction and different directions relative to each other at any given time.

7. The mobile platform according to claim **1,** wherein a first limb and a second limb are coupled to the front end of the chassis on opposing sides of the mobile platform, and a third limb and a fourth limb are coupled to the back end of the chassis on the opposing sides of the mobile platform.

8. The mobile platform according to claim **1,** wherein the first mechanical joint rotates about a first axis and the second mechanical joint rotates about a second axis that is parallel to the first axis.

9. The mobile platform according to claim **1,** wherein the second mechanical joint is located midway between the first and second wheels.

10. The mobile platform according to claim 1, further comprising:
at least one wheel actuator configured to actuate the first and second wheels;
wherein actuation of the first wheel is performed independent of actuation of the second wheel, or actuation of the first and second wheels.
